# EUROPEAN PATENT APPLICATION

(11) **EP 3 794 953 A1**
(43) Date of publication of application: **24.03.2021**
(21) Application number: 19802617.1
(22) Date of filing: 19.04.2019
(51) Int. Cl.: A23L 2/00

(54) **SPARKLING BEVERAGE HAVING EFFERVESCENCE RETAINABILITY AND METHOD FOR IMPROVING EFFERVESCENCE RETAINABILITY OF SPARKLING BEVERAGE**

(30) Priority: 18.05.2018 JP 2018095986
(71) Applicant: Suntory Holdings Limited, Osaka 530-8203 (JP)
(72) Inventor: ITOYAMA, Akinori, Kawasaki-shi, Kanagawa 211-0067 (JP); ASAMI, Yoji, Kawasaki-shi, Kanagawa 211-0067 (JP); FUJIE, Akiko, Kawasaki-shi, Kanagawa 211-0067 (JP); YOKOO, Yoshiaki, Kawasaki-shi, Kanagawa 211-0067 (JP)
(74) Representative: Mewburn Ellis LLP
(86) International application number: PCT/JP2019/016872
(87) International publication number: WO 2019/220865

(57) **Abstract**

The purpose of the present invention is to provide a sparkling beverage having effervescence retention and a method for improving the effervescence retention of a sparkling beverage. The present invention provides a sparkling beverage which has a content of Reb. B of 6-45 ppm and a content of Reb. M of 600 ppm or less.

## Description

### TECHNICAL FIELD

The present invention relates to a sparkling beverage having foam retention, and a method for improving foam retention of a sparkling beverage. The present invention also relates to the use of Reb. B for improving foam retention of a sparkling beverage comprising Reb. M and an agent comprising Reb. B for improving foam retention of a sparkling beverage comprising Reb. M.

### BACKGROUND ART

A wide range of consumers drink sparkling beverages by choice. A variety of sparkling beverages are currently commercially available, and these beverages have characteristics such that a user can visually enjoy foaming caused on opening a beverage container or when pouring the beverage into another container such as a glass, and can feel the refreshing feeling of the beverage going down his/her throat.

Sparkling beverages having foam retention have been reported. Patent Literature 1 reports a foaming beverage having improved foam retention containing one, or two or more selected from proline, a hesperidin sugar adduct and methyl hesperidin. Patent Literature 2 reports a beverage containing a water-soluble soybean polysaccharide.

### CITATION LIST

### Patent Literature

Patent Literature 1: Japanese Patent Laid-Open No. 2015-181361
Patent Literature 2: Japanese Patent Laid-Open No. 2016-129510

### SUMMARY OF THE INVENTION

### Technical Problem

Currently, there is a demand for novel sparkling beverages having foam retention and a method for improving foam retention. Accordingly, an object of the present invention is to provide a sparkling beverage having foam retention, and a method for improving foam retention of a sparkling beverage.

### Solution to the Problem

The present inventors have made earnest studies to solve the above-described problem, resulting in finding that foam retention of a sparkling beverage can be unexpectedly improved by causing a small amount of Reb. B (rebaudioside B) to be contained in a sparkling beverage comprising a small amount of Reb. M (rebaudioside M). The present invention is based on this finding.

The present invention embraces the following invention aspects:
[1] A sparkling beverage having a content of Reb. B of 6 to 45 ppm and a content of Reb. M of 600 ppm or less.
[2] The sparkling beverage according to [1], wherein the content of Reb. B is 8 to 45 ppm.
[3] The sparkling beverage according to [1] or [2], wherein the content of Reb. B is 8 to 40 ppm.
[4] The sparkling beverage according to any one of [1] to [3], wherein the content of Reb. B is 10 to 40 ppm.
[5] The sparkling beverage according to any one of [1] to [4], wherein the content of Reb. B is 12 to 20 ppm.
[6] The sparkling beverage according to [1], wherein the content of Reb. B is 6 ppm or more and less than a sweetness threshold value.
[7] The sparkling beverage according to any one of [1] to [6], wherein the content of Reb. M is 500 ppm or less.
[8] The sparkling beverage according to any one of [1] to [7], further comprising one or more steviol glycosides selected from the group consisting of Reb. A, Reb. C, Reb. D, Reb. E, Reb. F, Reb. G, Reb. I, Reb. J, Reb. K, Reb. N, Reb. O, Reb. Q, Reb. R, dulcoside A, rubusoside, steviolmonoside, steviolbioside and stevioside.
[9] The sparkling beverage according to any one of [1] to [8], comprising one or more steviol glycosides selected from the group consisting of Reb. A, Reb. C, Reb. E, Reb. F, Reb. G, Reb. I, Reb. J, Reb. K, Reb. N, Reb. O, Reb. Q, Reb. R, dulcoside A, rubusoside, steviolmonoside, steviolbioside and stevioside in an amount equal to or less than five times the content of Reb. B.
[10] The sparkling beverage according to [7], wherein a content of Reb. A is 0 to 100 ppm.
[11] The sparkling beverage according to any one of [1] to [10], further comprising one or more sweeteners selected from the group consisting of sucrose, high fructose corn syrup, erythritol, Mogroside V, corn syrup, aspartame, sucralose, acesulfame potassium, saccharin and xylitol.
[12] The sparkling beverage according to any one of [1] to [11], wherein the gas pressure is 1.0 kgf/cm² to 3.5 kgf/cm².
[13] The sparkling beverage according to any one of [1] to [11], having pH of 2.0 to 4.0.
[14] The sparkling beverage according to any one of [1] to [13], wherein a ratio between Reb. B and Reb. M is 1:2 to 1:300 in terms of weight ratio.
[15] The sparkling beverage according to any one of [1] to [14], having Brix of 5 to 13.
[16] The sparkling beverage according to any one of [1] to [15], having an alcohol content of less than 0.05 v/v%.
[17] The sparkling beverage according to any one of [1] to [16], wherein the sparkling beverage is an orange-flavored, lemon-flavored, lime-flavored, grape-flavored, ginger ale-flavored, cassis-flavored or cola-flavored beverage.
[18] The sparkling beverage according to any one of [1] to [17], comprising one or more selected from the group consisting of caramel, cinnamic aldehyde, phosphoric acid, vanilla and caffeine.
[19] The sparkling beverage according to any one of [1] to [18], wherein foam is stabilized.
[20] A method for improving foam retention of a sparkling beverage, including a step of preparing a sparkling beverage comprising 6 to 45 ppm of Reb. B and 600 ppm or less of Reb. M.
[21] Use of Reb. B for improving foam retention of a sparkling beverage comprising Reb. M.
[22] The use according to [21], wherein foam is stabilized for 26 seconds or more.
[23] The use according to [21], wherein foam is stabilized for 30 seconds or more.
[24] An agent comprising Reb. B, wherein the agent is for improving foam retention of a sparkling beverage comprising Reb. M.

### ADVANTAGEOUS EFFECTS OF THE INVENTION

According to the present invention, a sparkling beverage having foam retention and a method for improving foam retention of a sparkling beverage can be provided.

### BRIEF DESCRIPTION OF THE DRAWINGS

Figure 1 illustrates photographs of instruments used in a foam retention test. Figure 1(a) illustrates a 500 ml measuring cylinder, Figure 1(b) illustrates a 200 ml measuring cylinder, and Figure 1(c) illustrates a funnel.
Figure 2 is a schematic diagram illustrating procedures of the foam retention test.
Figure 3 illustrates graphs of results of the foam retention test, obtained at various concentrations of Reb. B and Reb. M.
Figure 4 illustrates graphs of results of the foam retention test, obtained at various pH's and gas pressures. Figure 4(a) illustrates results obtained at a gas pressure of 3.2 kgf/cm², Figure 4(b) illustrates results obtained at a gas pressure of 2.3 kgf/cm², and Figure 4(c) illustrates results obtained at a gas pressure of 0.8 kgf/cm².
Figure 5 illustrates a graph of results of the foam retention test obtained when Reb. B and Reb. M are contained in various commercially available sparkling beverages.

### DESCRIPTION OF EMBODIMENTS

The present invention will now be described in detail. It is noted that embodiments described below are merely illustrative and are not intended to limit the present invention to these embodiments alone. The present invention can be practised in various forms without departing from the scope thereof. It is noted that all literature and patent literature cited herein including unexamined patent applications, patent publications and the like is incorporated herein by reference.

As used herein, the terms "rebaudioside" and "Reb." have the same meaning. Similarly, as used herein, the terms "dulcoside" and "dulcoside" have the same meaning.

As used herein, the term "ppm" means "ppm by mass" unless otherwise stated. Besides, since a sparkling beverage usually has a specific gravity of 1, "ppm by mass" can be regarded as the same as "mg/L".

### 1. Sparkling Beverage having Foam Retention

As described above, the present inventors have unexpectedly obtained a sparkling beverage having foam retention by causing a small amount of Reb. B to be comprised in a sparkling beverage comprising a prescribed amount of Reb. M (rebaudioside M). Accordingly, a sparkling beverage of the present invention is a sparkling beverage having a content of Reb. B of 6 to 45 ppm and a content of Reb. M of 600 ppm or less.

The term "sparkling beverage" herein refers to a beverage in which bubble/foam is generated, and embraces, for example, a beverage in which a foam layer is formed on a liquid surface of the beverage when poured into a container. As used herein, in some cases, bubble generated within a beverage may be designated as a "bubble", and foam formed on a liquid surface of a beverage may be designated as "foam". Besides, As used herein, the term "to have foam retention" means that foam is retained, and the term "improvement of foam retention" means an improvement made to retain foam for a longer period of time.

An example of the sparkling beverage of the present invention includes a carbonated beverage. A carbonated beverage is a beverage containing a carbon dioxide gas, and such a carbon dioxide gas embraces a carbon dioxide gas separately injected into a beverage, and a carbon dioxide gas generated by fermentation of a part of a raw material. The carbonated beverage is not especially limited, and can be a refreshing beverage, a non-alcoholic beverage, an alcoholic beverage or the like. Specific examples include, but are not limited to, a sparkling beverage, a cola beverage, a diet cola beverage, ginger ale, a soda pop, a fruit flavored carbonated beverage and carbonated water having fruit flavor.

The content of Reb. B in the sparkling beverage of the present invention is 6 to 45 ppm. In another aspect of the present invention, the content of Reb. B in the sparkling beverage is 6 to 40 ppm, 6 to 35 ppm, 6 to 30 ppm, 6 to 25 ppm, 6 to 20 ppm, 6 to 15 ppm, 6 to 10 ppm, 6 to 8 ppm, 7 to 45 ppm, 7 to 40 ppm, 7 to 35 ppm, 7 to 30 ppm, 7 to 25 ppm, 7 to 20 ppm, 7 to 15 ppm, 7 to 10 ppm, 7 to 8 ppm, 8 to 45 ppm, 8 to 40 ppm, 8 to 35 ppm, 8 to 30 ppm, 8 to 25 ppm, 8 to 20 ppm, 8 to 15 ppm, 8 to 10 ppm, 9 to 45 ppm, 9 to 40 ppm, 9 to 35 ppm, 9 to 30 ppm, 9 to 25 ppm, 9 to 20 ppm, 9 to 15 ppm, 9 to 10 ppm, 10 to 45 ppm, 10 to 40 ppm, 10 to 35 ppm, 10 to 30 ppm, 10 to 25 ppm, 10 to 20 ppm, 10 to 15 ppm, 11 to 45 ppm, 11 to 40 ppm, 11 to 35 ppm, 11 to 30 ppm, 11 to 25 ppm, 11 to 20 ppm, 11 to 15 ppm, 12 to 45 ppm, 12 to 40 ppm, 12 to 35 ppm, 12 to 30 ppm, 12 to 25 ppm, 12 to 20 ppm, 12 to 15 ppm, 13 to 45 ppm, 13 to 40 ppm, 13 to 35 ppm, 13 to 30 ppm, 13 to 25 ppm, 13 to 20 ppm, 13 to 15 ppm, 14 to 45 ppm, 14 to 40 ppm, 14 to 35 ppm, 14 to 30 ppm, 14 to 25 ppm, 14 to 20 ppm, 15 to 45 ppm, 15 to 40 ppm, 15 to 35 ppm, 15 to 30 ppm, 15 to 25 ppm, 15 to 20 ppm, 12 to 15 ppm, 16 to 45 ppm, 16 to 40 ppm, 16 to 35 ppm, 16 to 30 ppm, 16 to 25 ppm, 16 to 20 ppm, 18 to 45 ppm, 18 to 40 ppm, 18 to 35 ppm, 18 to 30 ppm, 18 to 25 ppm, 20 to 45 ppm, 20 to 40 ppm, 20 to 35 ppm, 20 to 30 ppm, 20 to 25 ppm, 22 to 45 ppm, 22 to 40 ppm, 22 to 35 ppm or 22 to 30 ppm. Although Reb. B generally has slight bitterness, when the content falls in any of the above-described ranges, the influence of the bitterness of Reb. B on the beverage can be restrained with a foam retention effect provided. Besides, in another aspect of the present invention, the content of Reb. B in the beverage is 6 ppm or more and less than a sweetness threshold value, 10 ppm or more and less than the sweetness threshold value, or 12 ppm or more and less than sweetness threshold value. As used herein, the term "sweetness threshold value" means, when a sweet compound is added to a beverage, a minimum concentration of the sweet compound at which sweetness can be felt. The sweetness threshold value slightly varies depending on the composition of the beverage, and that of Reb. B is generally 25 ppm to 40 ppm. When the amount of Reb. B to be added is less than the sweetness threshold value, the foam retention can be improved by adding Reb. B to the beverage with the influence on the sweetness of the beverage restrained. The content of Reb. B in the beverage can be calculated based on an amount of a raw material added, or may be measured by a known analysis method such as liquid chromatography.

The content of Reb. M in the sparkling beverage of the present invention is 600 ppm or less. Besides, the content of Reb. M in the sparkling beverage of the present invention is over 0 ppm. In another aspect of the present invention, the content of Reb. M in the sparkling beverage is 500 ppm or less, 400 ppm or less, 300 ppm or less, 200 ppm or less, 100 ppm or less, 50 ppm or less, or 1 to 600 ppm, 5 to 500 ppm, 10 to 450 ppm, 20 to 400 ppm, 30 to 350 ppm, 40 to 300 ppm, 50 to 250 ppm, 60 to 200 ppm, 70 to 180 ppm, 80 to 160 ppm or 90 to 150 ppm. Reb. M is a sweet compound that particularly has natural sweetness close to that of sucrose among various steviol glycosides, and is suitably used in a sparkling beverage. When Reb. M is added to the beverage, the foam retention can be improved with natural sweetness imparted to the beverage. The content of Reb. M in the beverage can be calculated based on an amount of a raw material added, or may be measured by a known analysis method such as liquid chromatography.

Reb. B used in the sparkling beverage of the present invention is not especially limited, and may be a plant-derived material, a chemical synthetic material or a biosynthetic material. For example, it may be isolated and purified from a plant containing a large amount of Reb. B, or may be obtained through chemical synthesis or biosynthesis. Besides, Reb. B used in the sparkling beverage of the present invention need not have 100% purity, but may be a mixture with another steviol glycoside. In one aspect of the present invention, Reb. B is obtained by purifying a stevia extract, and the thus purified material may comprise another steviol glycoside in addition to Reb. B. Alternatively, Reb. B may be obtained by decomposing Reb. M, Reb. D or Reb. A.

Reb. M used in the sparkling beverage of the present invention is not especially limited, and may be a plant-derived material, a chemical synthetic material or a biosynthetic material. For example, it may be isolated and purified from a plant containing a large amount of Reb. M, or may be obtained through chemical synthesis or biosynthesis. Besides, Reb. M used in the sparkling beverage of the present invention need not have 100% purity, but may be a mixture with another steviol glycoside. In one aspect of the present invention, Reb. M is obtained by purifying a stevia extract, and the thus purified material may comprise another steviol glycoside in addition to Reb. M.

The gas pressure of the sparkling beverage of the present invention is not especially limited, and may be 0.7 kgf/cm² to 4.0 kgf/cm². In another aspect of the present invention, the gas pressure of the sparkling beverage is 0.7 kgf/cm² to 3.5 kgf/cm², 0.8 kgf/cm² to 3.5 kgf/cm², 1.0 kgf/cm² to 3.5 kgf/cm², 1.2 kgf/cm² to 3.5 kgf/cm², 1.4 kgf/cm² to 3.5 kgf/cm², 1.6 kgf/cm² to 3.5 kgf/cm², 1.8 kgf/cm² to 3.5 kgf/cm², 2.0 kgf/cm² to 3.5 kgf/cm², 2.2 kgf/cm² to 3.5 kgf/cm², 2.2 kgf/cm² to 3.3 kgf/cm², 2.2 kgf/cm² to 3.2 kgf/cm², 2.3 kgf/cm² to 4.0 kgf/cm², 2.3 kgf/cm² to 3.5 kgf/cm², 2.3 kgf/cm² to 3.2 kgf/cm², 3.0 kgf/cm² to 4.0 kgf/cm², or 3.0 kgf/cm² to 3.5 kgf/cm². A gas content in the sparkling beverage can be regulated by the gas pressure. The term "gas pressure" herein refers to a gas pressure of a carbon dioxide gas in the sparkling beverage held in a container unless otherwise stated. Accordingly, the sparkling beverage of the present invention can be filled in a container. As the container, a container in any shape and made of any material can be used, and the container can be, for example, a glass bottle, a can, a barrel or a PET bottle. For measuring the gas pressure, the beverage kept at a liquid temperature of 20°C is fixed in a gas internal pressure gauge, a carbon dioxide gas present in a head space is released to be exposed to air pressure by once opening a stopcock of the gas internal pressure gauge. Thereafter, the stopcock is closed again, and then the gas internal pressure gauge is shaken to allow a pointer to reach a prescribed position, and a value corresponding to the position is read. As used herein, the gas pressure of the sparkling beverage is measured by this method unless otherwise stated.

The sparkling beverage of the present invention may comprise an additional steviol glycoside in addition to Reb. B and Reb. M. The additional steviol glycoside is not especially limited, and in one aspect of the present invention, the sparkling beverage of the present invention further contains one or more steviol glycosides selected from the group consisting of Reb. A, Reb. C, Reb. D, Reb. E, Reb. F, Reb. G, Reb. I, Reb. J, Reb. K, Reb. N, Reb. O, Reb. Q, Reb. R, dulcoside A, rubusoside, steviolmonoside, steviolbioside and stevioside.

In one aspect of the present invention, a content of Reb. A is 0 to 100 ppm, 1 to 100 ppm, 1 to 60 ppm, 1 to 50 ppm, 1 to 40 ppm, 1 to 30 ppm, 1 to 20 ppm, 1 to 10 ppm, or 1 to 5 ppm.

In one aspect of the present invention, a content of Reb. C is 0 to 300 ppm, 1 to 300 ppm, 1 to 200 ppm, 1 to 150 ppm, 1 to 100 ppm, 1 to 80 ppm, 1 to 50 ppm, 1 to 30 ppm, or 1 to 10 ppm.

In one aspect of the present invention, a content of Reb. D is 0 to 600 ppm, 1 to 600 ppm, 5 to 500 ppm, 10 to 450 ppm, 20 to 400 ppm, 30 to 350 ppm, 40 to 300 ppm, 50 to 250 ppm, 60 to 200 ppm, 70 to 180 ppm, 80 to 160 ppm, or 90 to 150 ppm.

In one aspect of the present invention, a content of Reb. E is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of Reb. F is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of Reb. G is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of Reb. I is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of Reb. J is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of Reb. K is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of Reb. N is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of Reb. 0 is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of Reb. Q is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of Reb. R is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of dulcoside A is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of rubusoside is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of steviolmonoside is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of steviolbioside is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In one aspect of the present invention, a content of stevioside is 0 to 300 ppm, 1 to 300 ppm, 1 to 200 ppm, 1 to 150 ppm, 1 to 100 ppm, 1 to 80 ppm, 1 to 50 ppm, or 1 to 30 ppm.

In another aspect of the present invention, the sparkling beverage of the present invention may comprise one or more steviol glycosides selected from the group consisting of Reb. A, Reb. C, Reb. E, Reb. F, Reb. G, Reb. I, Reb. J, Reb. K, Reb. N, Reb. O, Reb. Q, Reb. R, dulcoside A, rubusoside, steviolmonoside, steviolbioside and stevioside in an amount equal to or less than 5 times the content of Reb. B. When the content of the steviol glycoside is limited to the amount equal to or less than 5 times the content of Reb. B, the taste quality of the beverage can be inhibited from being deteriorated by the steviol glycoside used in addition to Reb. B, with the foam retention improved. The content of the steviol glycoside used in addition to Reb. B may be equal to or less than 4 times, equal to or less than 3 times, equal to or less than twice, equal to or less than 1.5 times, equal to or less than 1.2 times, equal to or less than 1.0 time, equal to or less than 0.8 times, equal to or less than 0.5 times, equal to or less than 0.3 times, or equal to or less than 0.1 times the content of Reb. B, and the lower limit of the content of the steviol glycoside used in addition to Reb. B may be substantially 0 ppm or more. The term "to be substantially 0 ppm" means that an impurity such as the other steviol glycoside(s) unavoidably contained in process of preparation of Reb. B (purification of the stevia extract, biosynthesis or the like) may be contained.

In another aspect of the present invention, the content of Reb. A in the sparkling beverage of the present invention may be 0 ppm or more, and an amount equal to or less than 5 times the content of Reb. B. When the content of Reb. A is limited to this range, the influence of the bitterness of Reb. A can be restrained with the foam retention improved. The upper limit of the content of Reb. A may be equal to or less than 4 times, equal to or less than 3 times, equal to or less than twice, equal to or less than 1.5 times, equal to or less than 1.2 times, equal to or less than 1.0 time, equal to or less than 0.8 times, equal to or less than 0.5 times, equal to or less than 0.3 times, or equal to or less than 0.1 times the content of Reb. B, and the lower limit of the content of Reb. A may be substantially 0 ppm or more.

In another aspect of the present invention, the sparkling beverage of the present invention may comprise a sweetener in addition to the steviol glycoside. Such a sweetener is not especially limited, and the beverage may further contain, for example, one or more sweeteners selected from the group consisting of sucrose, high fructose corn syrup, erythritol, Mogroside V, corn syrup, aspartame (also designated as L-phenylalanine compound), sucralose, acesulfame potassium, saccharin and xylitol. In particular, from the viewpoint of imparting a refreshing taste, drinking ease, a natural flavor and adequate body, a natural sweetener is preferably used, and high fructose corn syrup, sucrose or corn syrup is particularly suitably used. One of such sweetener components may be used, or a plurality of these may be used. Such a sweetener may be comprised in the beverage in an amount, in terms of Brix, of 5.0 or less, 4.5 or less, 4.0 or less, 3.5 or less, 3.0 or less, 2.5 or less, 2.0 or less, 1.5 or less, 1.0 or less, or 0.5 or less, and the lower limit may be 0.1 or more.

A ratio between Reb. B and Reb. M comprised in the sparkling beverage of the present invention is not especially limited, and may be, in terms of weight ratio, 1:2 to 1:300, 1:3 to 1:200, 1:4 to 1:150, 1:5 to 1:100, 1:6 to 1:90, 1:7 to 1:80, 1:8 to 1:70, 1:9 to 1:60 or 1:10 to 1:50.

The pH of the sparkling beverage of the present invention is not especially limited, and is preferably 2.0 to 4.0, more preferably 2.2 to 3.7, and further preferably 2.3 to 3.3. When the pH falls in the above-described range, generation of microorganisms and the like otherwise caused during storage can be restrained, and in addition, a refreshing taste can be provided.

In one aspect of the present invention, the sparkling beverage of the present invention has pH of 2.5 to 3.0 and a gas pressure of 2.3 kgf/cm² to 3.2 kgf/cm².

The Brix of the sparkling beverage of the present invention is not especially limited, and is preferably 3 to 15, more preferably 5 to 13, and further preferably 7 to 11. Here, the Brix can be calculated based on a degree of sweetness, as compared with sucrose, of each sweetener such as steviol glycoside and a content of the sweetener. The sweetness of Reb. B is 325 times, of Reb. A is 300 times, of Reb. D is 250 times, and of Reb. M is 250 times as compared with that of sucrose. Accordingly, an amount of the steviol glycoside corresponding to a Brix of 1 can be calculated as 30.7 ppm regarding Reb. B, 33.3 ppm regarding Reb. A, and 40.0 ppm regarding Reb. D (also regarding Reb. M). The Brix of another steviol glycoside or a sweetener used in addition to the steviol glycoside can be similarly calculated. For example, the sweetness of acesulfame potassium is about 200 times, of sucralose is about 600 time, and of aspartame is about 180 times as compared with that of sucrose. It is noted that a relative ratio of the sweetness of each sweetener as compared with the sweetness of sucrose assumed as 1 can be obtained from a known sugar sweetness conversion table (such as "Inryo Yogo Jiten ("Dictionary of Beverage Terminology" in Japanese)", appendix p. 11, published by Beverage Japan Inc.) or the like.

The sparkling beverage of the present invention may contain alcohol. An alcoholic beverage refers to a beverage containing alcohol, and the term "alcohol" herein means ethyl alcohol (ethanol) unless otherwise stated. An alcoholic beverage of the present invention can be any type of beverages as long as it contains alcohol. It may be a beverage having an alcohol content of 0.05 to 40 v/v% such as beer, low-malt beer, shochu highball or a cocktail, or a beverage having an alcohol content of less than 0.05 v/v% such as non-alcoholic beer, shochu highball taste beverage or a refreshing beverage. The sparkling beverage of the present invention has an alcohol content of preferably less than 0.05 v/v%, and more preferably 0.00 v/v%. It is noted that an alcohol content herein is expressed as a volume/volume percentage (v/v%). Besides, an alcohol content of a beverage can be measured by any one of known methods, and can be measured with, for example, a vibration densitometer.

The flavor of the sparkling beverage of the present invention is not especially limited, and the beverage can be adjusted to have various flavors. The sparkling beverage of the present invention may be, for example, an orange-flavored, lemon-flavored, lime-flavored, grape-flavored, ginger ale-flavored, cassis-flavored, or cola-flavored beverage. The flavor of the sparkling beverage of the present invention can be adjusted by adding a component approved as a food additive or a component that is not approved but generally regarded as safe because it is eaten for a long period of time, such as fruit juice, an acidulant, a spice, a plant extract, a dairy product, or another flavor. In one aspect of the present invention, the sparkling beverage of the present invention is not a beer-taste beverage.

The sparkling beverage of the present invention may further contain one or more selected from the group consisting of caramel, cinnamic aldehyde (cinnamaldehyde), phosphoric acid, vanilla and caffeine. When such a component is contained, the foam retention can be further improved. Here, caffeine may be not only a purified product usable as a food additive (purified product having a caffeine content of 98.5% or more) or a coarsely purified product usable as food (having a caffeine content of 50 to 98.5%) but also an extract of a plant containing caffeine (such as a tea leaf, a cola nut, a coffee bean or guarana) or a concentrate of the extract. In one aspect of the present invention, a caffeine content in the sparkling beverage can be 1 to 200 ppm. Quantitative determination of caffeine may be performed by any method, and can be performed by, for example, filtering the sparkling beverage through a membrane filter (cellulose acetate film 0.45 µm, manufactured by ADVANTEC), and subjecting the resultant sample to high-performance liquid chromatography (HPLC).

In another aspect, the sparkling beverage of the present invention can contain cinnamic aldehyde (cinnamaldehyde). Here, cinnamaldehyde (C₆H₅CH=CH-CHO, molecular weight: 132.16) is a kind of aromatic aldehydes known as a cinnamon odor component, and is available as a fragrance preparation. In one aspect of the present invention, the sparkling beverage can contain cinnamaldehyde in an amount in a specific range. A cinnamaldehyde content in the sparkling beverage of the present invention can be, for example, 0.5 to 50 ppm, and preferably 0.5 to 32 ppm or 1.0 to 20 ppm. Quantitative determination of cinnamaldehyde can be performed by, for example, gas chromatography or a method using a mass spectrometer or the like.

In still another aspect, the sparkling beverage of the present invention can contain caramel (or caramel color). Here, edible known caramel color can be used as the caramel. For example, a product obtained by heat treating an edible carbohydrate typified by sugar or glucose, or a product obtained by heat treating an edible carbohydrate with an acid or alkali added thereto can be used. Alternatively, a sugar content contained in fruit juice or vegetable juice can be caramelized for use, and in this case, the sugar content can be caramelized by a heat treatment or a treatment with an acid or alkali. The sparkling beverage of the present invention can contain caramel color in a content in a specific range.

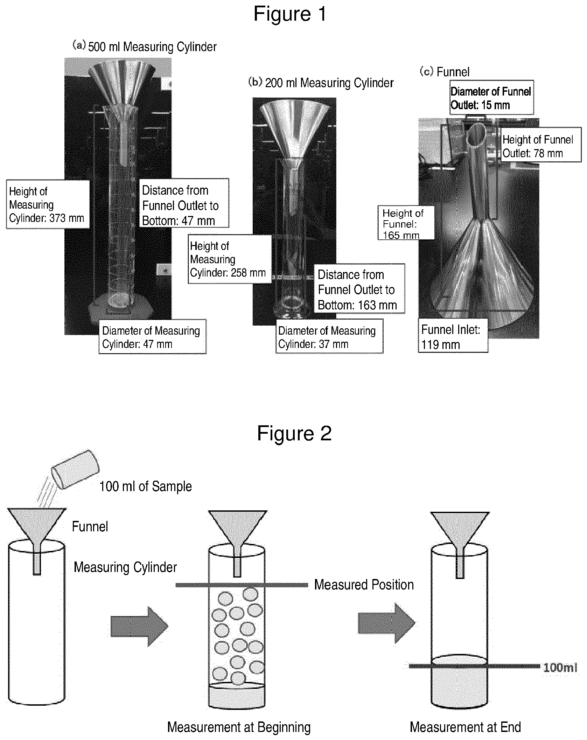

In the sparkling beverage of the present invention, foam is stabilized. For example, foam generated when the sparkling beverage of the present invention is poured into a container is retained for a longer period of time than that of a general sparkling beverage. The foam retention of a sparkling beverage can be evaluated as follows. To a test solution having pH adjusted with phosphoric acid, Reb. B and an arbitrary additive are added, and a gas pressure in the resultant is adjusted by using a carbon dioxide gas. The thus obtained sample is put in a container (such as a 100 ml glass bottle), the container is sealed and then opened, and the sample contained in the container is poured into a 500 mL measuring cylinder with a funnel placed on the upper end thereof at a rate of 100 ml/2 sec in such a manner as to run down on the funnel wall. A scale mark corresponding to the level of the thus obtained foaming surface is read to be defined as a liquid surface height (ml) at the beginning of the test. Instruments used in the test and the outline of the test are respectively illustrated in Figures 1 and 2. The liquid surface height is checked every predetermined time, and time until the liquid surface height reaches 100 ml (namely, until the whole foam on the liquid surface disappears) is measured and recorded. When foam disappearance time is high, a 200 mL measuring cylinder may be used for the test instead of the 500 mL measuring cylinder.

Foam retention time of the sparkling beverage of the present invention is, when measured by the above-described method, preferably 26 seconds or more, more preferably 30 seconds or more, and further preferably 40 seconds or more.

The sparkling beverage of the present invention may be prepared as a packaged beverage obtained by heat sterilizing the beverage and filling the resultant in a container. The container is not especially limited, and examples include a PET bottle, an aluminum can, a steel can, a carton, a chilled cup and a bottle. When heat sterilization is performed, the type is not especially limited, and the sterilization can be performed by employing usual technique such as UHT sterilization or retort sterilization. A temperature employed in the heat sterilization process is not especially limited, and is, for example, 65 to 130°C, and preferably 85 to 120°C, and the process is performed for 10 to 40 minutes. Even when the sterilization is performed at a proper temperature for several seconds, for example, 5 to 30 seconds, however, there arises no problem as long as a sterilization value equivalent to that obtained under the aforementioned conditions can be obtained.

The energy (total energy) of the beverage of the present invention is not especially limited, and can be 0 to 50 Kcal/100 ml, 0 to 45 Kcal/100 ml, 0 to 40 Kcal/100 ml, 0 to 35 Kcal/100 ml, 0 to 30 Kcal/100 ml, 0 to 24 Kcal/100 ml, 0 to 22 Kcal/100 ml, 0 to 20 Kcal/100 ml, 0 to 15 Kcal/100 ml, 0 to 10 Kcal/100 ml, 0 to 5 Kcal/100 ml, 0.1 to 50 Kcal/100 ml, 0.1 to 45 Kcal/100 ml, 0.1 to 40 Kcal/100 ml, 0.1 to 35 Kcal/100 ml, 0.1 to 30 Kcal/100 ml, 0.1 to 24 Kcal/100 ml, 0.1 to 22 Kcal/100 ml, 0.1 to 20 Kcal/100 ml, 0.1 to 15 Kcal/100 ml, 0.1 to 10 Kcal/100 ml, 0.1 to 5 Kcal/100 ml, 1 to 50 Kcal/100 ml, 1 to 45 Kcal/100 ml, 1 to 40 Kcal/100 ml, 1 to 35 Kcal/100 ml, 1 to 30 Kcal/100 ml, 1 to 24 Kcal/100 ml, 1 to 22 Kcal/100 ml, 1 to 20 Kcal/100 ml, 1 to 15 Kcal/100 ml, 1 to 10 Kcal/100 ml, 1 to 5 Kcal/100 ml, 5 to 50 Kcal/100 ml, 5 to 45 Kcal/100 ml, 5 to 40 Kcal/100 ml, 5 to 35 Kcal/100 ml, 5 to 30 Kcal/100 ml, 5 to 24 Kcal/100 ml, 5 to 20 Kcal/100 ml, 5 to 15 Kcal/100 ml, 5 to 10 Kcal/100 ml, 10 to 50 Kcal/100 ml, 10 to 45 Kcal/100 ml, 10 to 40 Kcal/100 ml, 10 to 35 Kcal/100 ml, 10 to 30 Kcal/100 ml, 10 to 24 Kcal/100 ml, 10 to 20 Kcal/100 ml, 10 to 15 Kcal/100 ml, 15 to 50 Kcal/100 ml, 15 to 45 Kcal/100 ml, 15 to 40 Kcal/100 ml, 15 to 35 Kcal/100 ml, 15 to 30 Kcal/100 ml, 15 to 24 Kcal/100 ml, 15 to 20 Kcal/100 ml, 20 to 50 Kcal/100 ml, 20 to 45 Kcal/100 ml, 20 to 40 Kcal/100 ml, 20 to 35 Kcal/100 ml, 20 to 30 Kcal/100 ml, 20 to 24 Kcal/100 ml, 24 to 50 Kcal/100 ml, 24 to 45 Kcal/100 ml, 24 to 40 Kcal/100 ml, 24 to 35 Kcal/100 ml, or 24 to 30 Kcal/100 ml.

A production method for the sparkling beverage of the present invention is not especially limited, and the beverage can be produced by a usual production method for a sparkling beverage. For example, a syrup of a concentrate of components contained in the sparkling beverage of the present invention is prepared, and sparkling drinking water may be added thereto for adjustment to a prescribed concentration, or non-sparkling drinking water may be added thereto and a carbon dioxide gas may be supplied thereafter to prepare the sparkling beverage. Alternatively, without preparing the syrup, the sparkling beverage of the present invention may be prepared by adding a prescribed component directly to a sparkling beverage.

### 2. Method for Improving Foam Retention of a Sparkling Beverage

The present invention provides, as a second aspect, a method for improving foam retention of a sparkling beverage. The method for improving foam retention of a sparkling beverage of the present invention comprises a step of preparing a sparkling beverage comprising 6 to 45 ppm of Reb. B and 600 ppm or less of Reb. M. The term "step of preparing a sparkling beverage comprising 6 to 45 ppm of Reb. B and 600 ppm or less of Reb. M" herein refers to a step of causing 6 to 45 ppm of Reb. B and 600 ppm or less of Reb. M to be comprised in a sparkling beverage, and a method for causing prescribed amounts of Reb. B and Reb. M to be contained is not especially limited. Accordingly, Reb. B and Reb. M may be precedently mixed as raw materials in production of the sparkling beverage, may be separately added after the production of the sparkling beverage, or may be generated through decomposition or the like from a mixed raw material.

The method for improving foam retention of the present invention may comprise an additional step in addition to the above-described step. In one aspect of the present invention, the method may comprise, before or after the step of preparing a sparkling beverage comprising 6 to 45 ppm of Reb. B and 600 ppm or less of Reb. M, a step of adjusting pH of the sparkling beverage or a step of adjusting a gas pressure.

In another aspect of the present invention, the method for improving foam retention may comprise a step of preparing an sparkling beverage comprising 6 to 40 ppm, 6 to 35 ppm, 6 to 30 ppm, 6 to 25 ppm, 6 to 20 ppm, 6 to 15 ppm, 6 to 10 ppm, 6 to 8 ppm, 7 to 45 ppm, 7 to 40 ppm, 7 to 35 ppm, 7 to 30 ppm, 7 to 25 ppm, 7 to 20 ppm, 7 to 15 ppm, 7 to 10 ppm, 7 to 8 ppm, 8 to 45 ppm, 8 to 40 ppm, 8 to 35 ppm, 8 to 30 ppm, 8 to 25 ppm, 8 to 20 ppm, 8 to 15 ppm, 8 to 10 ppm, 9 to 45 ppm, 9 to 40 ppm, 9 to 35 ppm, 9 to 30 ppm, 9 to 25 ppm, 9 to 20 ppm, 9 to 15 ppm, 9 to 10 ppm, 10 to 45 ppm, 10 to 40 ppm, 10 to 35 ppm, 10 to 30 ppm, 10 to 25 ppm, 10 to 20 ppm, 10 to 15 ppm, 11 to 45 ppm, 11 to 40 ppm, 11 to 35 ppm, 11 to 30 ppm, 11 to 25 ppm, 11 to 20 ppm, 11 to 15 ppm, 12 to 45 ppm, 12 to 40 ppm, 12 to 35 ppm, 12 to 30 ppm, 12 to 25 ppm, 12 to 20 ppm, 12 to 15 ppm, 13 to 45 ppm, 13 to 40 ppm, 13 to 35 ppm, 13 to 30 ppm, 13 to 25 ppm, 13 to 20 ppm, 13 to 15 ppm, 14 to 45 ppm, 14 to 40 ppm, 14 to 35 ppm, 14 to 30 ppm, 14 to 25 ppm, 14 to 20 ppm, 15 to 45 ppm, 15 to 40 ppm, 15 to 35 ppm, 15 to 30 ppm, 15 to 25 ppm, 15 to 20 ppm, 12 to 15 ppm, 16 to 45 ppm, 16 to 40 ppm, 16 to 35 ppm, 16 to 30 ppm, 16 to 25 ppm, 16 to 20 ppm, 18 to 45 ppm, 18 to 40 ppm, 18 to 35 ppm, 18 to 30 ppm, 18 to 25 ppm, 20 to 45 ppm, 20 to 40 ppm, 20 to 35 ppm, 20 to 30 ppm, 20 to 25 ppm, 22 to 45 ppm, 22 to 40 ppm, 22 to 35 ppm or 22 to 30 ppm of Reb. B.

In another aspect of the present invention, the method for improving foam retention may comprise a step of preparing an sparkling beverage comprising 600 ppm or less, 1 to 600 ppm, 5 to 500 ppm, 10 to 450 ppm, 20 to 400 ppm, 30 to 350 ppm, 40 to 300 ppm, 50 to 250 ppm, 60 to 200 ppm, 70 to 180 ppm, 80 to 160 ppm or 90 to 150 ppm of Reb. M.

Besides, as described above in "1. Sparkling Beverage having Foam Retention", the sparkling beverage used in the method for improving foam retention of the present invention may comprise an additional steviol glycoside in addition to Reb. B and Reb. M or another sweetener in addition to steviol glycosides. The pH and the gas pressure of the sparkling beverage are also similar to those described in "1. Sparkling Beverage having Foam Retention".

### 3. Use of Reb. B for Improving Foam Retention of a Sparkling Beverage Comprising Reb. M

The present invention provides, as a third aspect, the use of Reb. B for improving the foam retention of a sparkling beverage comprising Reb. M. The present inventors have unexpectedly found that Reb. B, a kind of steviol glycoside, has an effect of improving foam retention of a sparkling beverage comprising Reb. M, resulting in conceiving the present invention.

In the use of Reb. B for improving foam retention of a sparkling beverage comprising Reb. M of the present invention, Reb. B is used in an amount, with respect to the sparkling beverage comprising Reb. M, of 6 to 45 ppm, 6 to 40 ppm, 6 to 35 ppm, 6 to 30 ppm, 6 to 25 ppm, 6 to 20 ppm, 6 to 15 ppm, 6 to 10 ppm, 6 to 8 ppm, 7 to 45 ppm, 7 to 40 ppm, 7 to 35 ppm, 7 to 30 ppm, 7 to 25 ppm, 7 to 20 ppm, 7 to 15 ppm, 7 to 10 ppm, 7 to 8 ppm, 8 to 45 ppm, 8 to 40 ppm, 8 to 35 ppm, 8 to 30 ppm, 8 to 25 ppm, 8 to 20 ppm, 8 to 15 ppm, 8 to 10 ppm, 9 to 45 ppm, 9 to 40 ppm, 9 to 35 ppm, 9 to 30 ppm, 9 to 25 ppm, 9 to 20 ppm, 9 to 15 ppm, 9 to 10 ppm, 10 to 45 ppm, 10 to 40 ppm, 10 to 35 ppm, 10 to 30 ppm, 10 to 25 ppm, 10 to 20 ppm, 10 to 15 ppm, 11 to 45 ppm, 11 to 40 ppm, 11 to 35 ppm, 11 to 30 ppm, 11 to 25 ppm, 11 to 20 ppm, 11 to 15 ppm, 12 to 45 ppm, 12 to 40 ppm, 12 to 35 ppm, 12 to 30 ppm, 12 to 25 ppm, 12 to 20 ppm, 12 to 15 ppm, 13 to 45 ppm, 13 to 40 ppm, 13 to 35 ppm, 13 to 30 ppm, 13 to 25 ppm, 13 to 20 ppm, 13 to 15 ppm, 14 to 45 ppm, 14 to 40 ppm, 14 to 35 ppm, 14 to 30 ppm, 14 to 25 ppm, 14 to 20 ppm, 15 to 45 ppm, 15 to 40 ppm, 15 to 35 ppm, 15 to 30 ppm, 15 to 25 ppm, 15 to 20 ppm, 12 to 15 ppm, 16 to 45 ppm, 16 to 40 ppm, 16 to 35 ppm, 16 to 30 ppm, 16 to 25 ppm, 16 to 20 ppm, 18 to 45 ppm, 18 to 40 ppm, 18 to 35 ppm, 18 to 30 ppm, 18 to 25 ppm, 20 to 45 ppm, 20 to 40 ppm, 20 to 35 ppm, 20 to 30 ppm, 20 to 25 ppm, 22 to 45 ppm, 22 to 40 ppm, 22 to 35 ppm or 22 to 30 ppm.

A content of Reb. M in the sparkling beverage to be used in the use of Reb. B of the present invention is not especially limited as long as it is over 0 ppm, and is, for example, 600 ppm or less. In another aspect of the present invention, the content of Reb. M in the sparkling beverage is 500 ppm or less, 400 ppm or less, 300 ppm or less, 200 ppm or less, 100 ppm or less, 50 ppm or less, or 1 to 600 ppm, 5 to 500 ppm, 10 to 450 ppm, 20 to 400 ppm, 30 to 350 ppm, 40 to 300 ppm, 50 to 250 ppm, 60 to 200 ppm, 70 to 180 ppm, 80 to 160 ppm or 90 to 150 ppm. Reb. M is a sweet compound that particularly has natural sweetness close to that of sucrose among various steviol glycosides, and is suitably used in a sparkling beverage. When Reb. M is added to the beverage, the foam retention can be improved with natural sweetness imparted to the beverage.

In the use of Reb. B for improving foam retention of a sparkling beverage comprising Reb. M of the present invention, the sparkling beverage comprising Reb. M in which Reb. B is used is not especially limited, and a general carbonated beverage or the like can be selected. The carbonated beverage is not especially limited and can be a refreshing beverage, a non-alcoholic beverage, an alcoholic beverage or the like. Specific examples include, but are not limited to, a sparkling beverage, a cola beverage, a diet cola beverage, ginger ale, a soda pop, a fruit flavored carbonated beverage and carbonated water having fruit flavor.

The pH and the gas pressure of the sparkling beverage may be similar to those described in "1. Sparkling Beverage having Foam Retention".

Foam retention time to be improved by the use of Reb. B for improving foam retention of a sparkling beverage comprising Reb. M of the present invention is, when measured by the method described above in "1. Sparkling Beverage having Foam Retention", preferably 26 seconds or more, more preferably 30 seconds or more, and further preferably 40 seconds or more.

### 4. Agent Comprising Reb. B for Improving Foam Retention of a Sparkling Beverage Comprising Reb. M

The present invention provides, as a fourth aspect, an agent comprising Reb. B for improving foam retention of a sparkling beverage comprising Reb. M. As used herein, the term "foam retention improving agent" refers to a substance that improves foam retention of a sparkling beverage when added to the sparkling beverage. The agent of the present invention can improve, when added to a sparkling beverage comprising Reb. M, foam retention of the sparkling beverage itself preferably without causing a user to recognize a taste of the agent itself.

The agent of the present invention contains Reb. B. Besides, as described above in "1. Sparkling Beverage having Foam Retention", the foam retention improving agent of the present invention may comprise an additional steviol glycoside in addition to Reb. B or another sweetener in addition to steviol glycosides as long as the effects of the present invention are not impaired.

The amount of Reb. B comprised in the foam retention improving agent of the present invention is not especially limited, and may be 30 to 100% by weight, 40 to 99% by weight, 50 to 98% by weight, 60 to 97% by weight, 70 to 96% by weight, or 80 to 95% by weight. The foam retention improving agent of the present invention may consist essentially of Reb. B. As used herein, the term "to consist essentially of Reb. B" means that an impurity such as another steviol glycoside unavoidably contained in process of preparation of Reb. B (purification of a stevia extract, biosynthesis or the like) may be contained.

A content of Reb. M in the sparkling beverage comprising Reb. M to be improved in the foam retention by the agent of the present invention is not especially limited as long as it is over 0 ppm, and is, for example, 600 ppm or less. In another aspect of the present invention, the content of Reb. M in the sparkling beverage is 500 ppm or less, 400 ppm or less, 300 ppm or less, 200 ppm or less, 100 ppm or less, 50 ppm or less, or 1 to 600 ppm, 5 to 500 ppm, 10 to 450 ppm, 20 to 400 ppm, 30 to 350 ppm, 40 to 300 ppm, 50 to 250 ppm, 60 to 200 ppm, 70 to 180 ppm, 80 to 160 ppm or 90 to 150 ppm. Reb. M is a sweet compound that particularly has natural sweetness close to that of sucrose among various steviol glycosides, and is suitably used in a sparkling beverage.

Now, the present invention will be more specifically described with reference to examples, and it is noted that the present invention is not limited to these examples.

### EXAMPLES

### Example A - Examination of Content of Reb. B and Reb. M

### Preparation of Sparkling Beverage

Phosphoric acid (manufactured by Nippon Chemical Industrial Co., Ltd.) was added to drinking water to adjust pH to 2.5. After the adjustment of pH, Reb. B (purity: 98%) and Reb. M (purity: 96%, containing 0.9% of Reb. A and 0.4% of Reb. B as impurities) were added to the drinking water in each content shown in Table 1 and a gas pressure was adjusted to 3.2 kgf/cm², and thus, samples of Examples 1 to 18 were obtained. The gas pressure was adjusted at 20°C.

### Evaluation of Foam Retention (Foam Retention Test)

The instruments used in the test and the outline of the test are respectively illustrated in Figures 1 and 2. As illustrated in Figure 1, a 500 ml measuring cylinder (Figure 1(a)) and a funnel (Figure (c)) were used in the test. These instruments will be described in detail below.

500 ml Measuring Cylinder
- Height of Measuring Cylinder: 373 mm
- Diameter of Measuring Cylinder: 47 mm
- Distance from Funnel Outlet to Bottom: 260 mm Funnel
- Funnel Inlet: 119 mm
- Height of Funnel: 165 mm
- Diameter of Funnel Outlet: 15 mm
- Height of Funnel Outlet: 78 mm

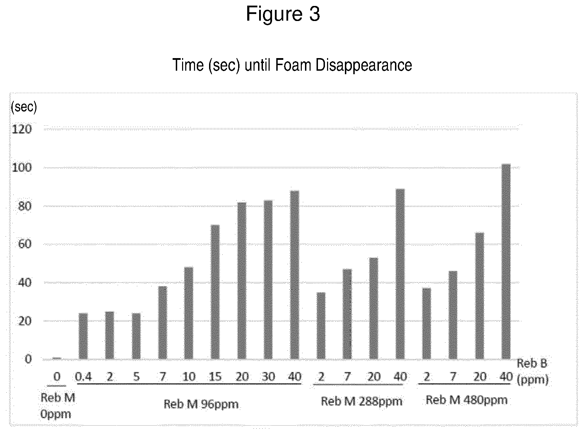

A container (100 ml glass bottle) holding each sample obtained in "Preparation of Sparkling Beverage" was sealed. Thereafter, the container was opened, the sample held in the container was poured into the 500 mL measuring cylinder (NALGENE CAT. No. 3663-0500) with the funnel placed on the upper end thereof at a rate of 100 ml/2 sec in such a manner as to run down on the funnel wall. A scale mark corresponding to the level of the thus obtained foaming surface was read to be defined as a liquid surface height (ml) at the beginning of the test. The liquid surface height was checked every predetermined time, and time until the liquid surface height reached 100 ml (namely, until the whole foam on the liquid surface disappeared) was measured and recorded. This evaluation was performed on each of the samples of Examples 1 to 18. Results thus obtained are shown in Table 1 and Figure 3. It is noted that each content of Reb. B and Reb. M shown in the table is a value calculated on the basis of the purity and the mixing amount of each raw material.

**Table 1: Evaluation of Samples having Various Reb. B and Reb. M Contents**

| | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 | Example 17 | Example 18 |
|---|---|---|---|---|---|---|---|---|---|---|---|---|---|---|---|---|---|---|
| Reb. B Content (ppm) | 0 | 0.4 | 2 | 5 | 7 | 10 | 15 | 20 | 30 | 40 | 2 | 7 | 20 | 40 | 2 | 7 | 20 | 40 |
| Reb. M Content (ppm) | 0 | 96 | 96 | 96 | 96 | 96 | 96 | 96 | 96 | 96 | 288 | 288 | 288 | 288 | 480 | 480 | 480 | 480 |

| Time (sec) | Position of Liquid Surface or Foam Surface (ml) | | | | | | | | | | | | | | | | | |
|---|---|---|---|---|---|---|---|---|---|---|---|---|---|---|---|---|---|---|
| 0 | 110 | 350 | 350 | 350 | 350 | 350 | 350 | 350 | 370 | 350 | 320 | 340 | 340 | 370 | 350 | 350 | 350 | 330 |
| 5 | 100 | 290 | 300 | 280 | 310 | 330 | 320 | 330 | 330 | 330 | 290 | 300 | 300 | 320 | 300 | 320 | 300 | 280 |
| 10 | | 160 | 250 | 240 | 270 | 280 | 300 | 300 | 320 | 300 | 270 | 270 | 280 | 280 | 280 | 290 | 280 | 260 |
| 15 | | 190 | 200 | 190 | 230 | 260 | 260 | 280 | 300 | 270 | 240 | 240 | 260 | 260 | 250 | 260 | 260 | 250 |
| 30 | | 100 | 100 | 100 | 130 | 160 | 190 | 230 | 240 | 230 | 120 | 130 | 180 | 230 | 150 | 160 | 200 | 230 |
| 45 | | | | | 100 | 110 | 120 | 130 | 180 | 180 | 100 | 110 | 120 | 160 | 100 | 110 | 130 | 170 |
| 60 | | | | | | 100 | 110 | 120 | 120 | 130 | | 100 | 100 | 130 | | 100 | 110 | 140 |
| 75 | | | | | | | 100 | 110 | 110 | 120 | | | | 120 | | | 100 | 120 |
| 90 | | | | | | | | 100 | 100 | 100 | | | | 100 | | | | 110 |
| 105 | | | | | | | | | | | | | | | | | | 100 |
| 120 | | | | | | | | | | | | | | | | | | |
| Time (sec) until Foam Disappearance | 1 | 24 | 25 | 24 | 38 | 48 | 70 | 82 | 83 | 88 | 35 | 47 | 53 | 89 | 37 | 46 | 66 | 102 |

Based on the above-described results, improvement of foam retention was observed in samples containing 6 to 45 ppm of Reb. B and 600 ppm or less of Reb. M.

### Example B - Examination of the Influence of pH and Gas Pressure on Foam Retention

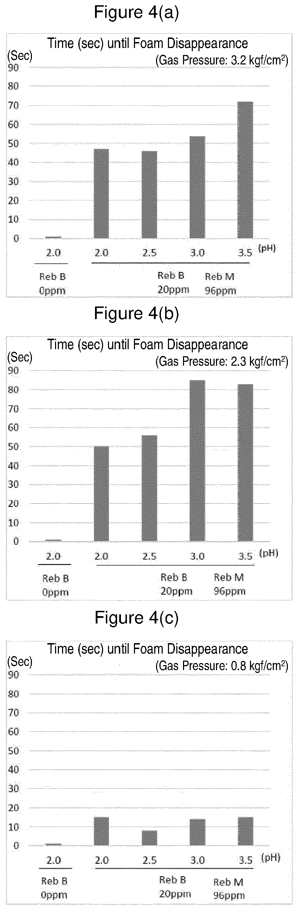

In order to examine the influence of pH and a gas pressure on foam retention, samples (for Examples 19 to 33) adjusted to various pH's and gas pressures as shown in Table 2 were prepared in the same manner as in Example A. The concentration of Reb. B was set to 0 ppm or 20 ppm, and the concentration of Reb. M was set to 96 ppm. The foam retention of the thus obtained samples was evaluated using the 500 ml measuring cylinder in the same manner as in Example A. Results thus obtained are shown in Table 2 and Figure 4. It is noted that each content of Reb. B and Reb. M shown in the table is a value calculated on the basis of the purity and the mixing amount of the raw material.

**Table 2: Examination of Influence of pH and Gas Pressure on Foam Retention**

| | Example 19 | Example 20 | Example 21 | Example 22 | Example 23 | Example 24 | Example 25 | Example 26 | Example 27 | Example 28 | Example 29 | Example 30 | Example 31 | Example 32 | Example 33 |
|---|---|---|---|---|---|---|---|---|---|---|---|---|---|---|---|
| pH | 2.0 | 2.0 | 2.5 | 3.0 | 3.5 | 2.0 | 2.0 | 2.5 | 3.0 | 3.5 | 2.0 | 2.0 | 2.5 | 3.0 | 3.5 |
| Gas Pressure (kgf/cm2) | 3.2 | 3.2 | 3.2 | 3.2 | 3.2 | 2.3 | 2.3 | 2.3 | 2.3 | 2.3 | 0.8 | 0.8 | 0.8 | 0.8 | 0.8 |
| Reb. B Content (ppm) | 0 | 20 | 20 | 20 | 20 | 0 | 20 | 20 | 20 | 20 | 0 | 20 | 20 | 20 | 20 |

| Time (sec) | Position of Liquid Surface or Foam Surface (ml) | | | | | | | | | | | | | | |
|---|---|---|---|---|---|---|---|---|---|---|---|---|---|---|---|
| 0 | 110 | 350 | 330 | 350 | 330 | 110 | 240 | 230 | 250 | 230 | 110 | 150 | 130 | 150 | 130 |
| 5 | 100 | 330 | 280 | 310 | 290 | 100 | 200 | 200 | 210 | 190 | 100 | 120 | 110 | 120 | 120 |
| 10 | | 300 | 260 | 280 | 270 | | 180 | 190 | 190 | 170 | | 110 | 100 | 110 | 110 |
| 15 | | 270 | 240 | 250 | 250 | | 160 | 170 | 170 | 160 | | 100 | | 100 | 100 |
| 30 | | 200 | 170 | 200 | 170 | | 130 | 130 | 150 | 150 | | | | | |
| 45 | | 120 | 110 | 130 | 140 | | 110 | 120 | 140 | 140 | | | | | |
| 60 | | 100 | 100 | 100 | 120 | | 100 | 100 | 120 | 120 | | | | | |
| 75 | | | | | 100 | | | | 110 | 110 | | | | | |
| 90 | | | | | | | | | 100 | 100 | | | | | |
| 105 | | | | | | | | | | | | | | | |
| Time (sec) until Foam Disappearance | 1 | 47 | 46 | 54 | 72 | 1 | 50 | 56 | 85 | 83 | 1 | 15 | 8 | 14 | 15 |

Based on the results shown in Table 2 and Figure 4, it was confirmed that the foam retention is improved at various pHs and gas pressures. The improvement effect of the foam retention was remarkable particularly at a gas pressure over 0.8 kgf/cm². Besides, it was confirmed that the improvement effect of the foam retention tends to be high particularly at a high gas pressure (2.3 kgf/cm² and 3.2 kgf/cm²) and pH of about 2.3 to 3.3

### Example C - Examination of the Influence of the Use of Reb. B and Reb. M on Foam Retention in Commercially Available Beverages

In order to examine the influence of use of Reb. B and Reb. M on the foam retention in a commercially available beverage, the foam retention was evaluated with Reb. B and Reb. M contained in a commercially available beverage.

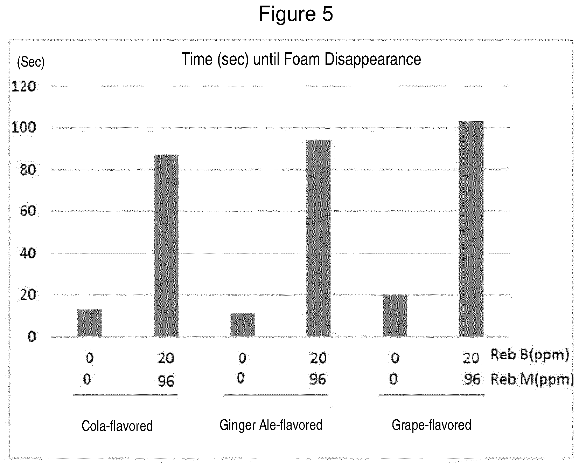

Each sample was prepared as follows. First, each of commercially available beverages, that is, a cola-flavored carbonated beverage (gas pressure: about 3.2 kgf/cm²), a ginger ale-flavored carbonated beverage (gas pressure: about 3.0 kgf/cm²) and a grape-flavored carbonated beverage (gas pressure: about 2.5 kgf/cm²), was transferred to a container (100 ml glass bottle), in which 20 ppm of Reb. B and 96 ppm of Reb. M were added. The resultant container (100 ml glass bottle) was sealed, and was allowed to stand still in a refrigerator at 4°C for 1 hour. The foam retention was evaluated in the same manner as in Example A. The foam retention of a sample containing neither Reb. B nor Reb. M was also evaluated as a control test performed in a similar manner. Results thus obtained are shown in Table 3 and Figure 5. It is noted that each content of Reb. B and Reb. M shown in the table is a value calculated on the basis of the purity and the mixing amount of the raw material.

**Table 3: Examination of Influence of Use of Reb. B and Reb. M on Foam Retention in Commercially Available Beverages**

| | Example 34 | Example 35 | Example 36 | Example 37 | Example 38 | Example 39 |
|---|---|---|---|---|---|---|
| Flavor | Cola-flavored | | Ginger Ale-flavored | | Grape-flavored | |
| Reb. B Content (ppm) | 0 | 20 | 0 | 20 | 0 | 20 |
| Reb. M Content (ppm) | 0 | 96 | 0 | 96 | 0 | 96 |

| Time (sec) | Position of Liquid Surface or Foam Surface (ml) | | | | | |
|---|---|---|---|---|---|---|
| 0 | 260 | 360 | 240 | 340 | 200 | 290 |
| 5 | 180 | 310 | 180 | 300 | 180 | 270 |
| 10 | 140 | 270 | 120 | 270 | 160 | 240 |
| 15 | 100 | 240 | 100 | 240 | 130 | 220 |
| 30 | | 210 | | 200 | 100 | 190 |
| 45 | | 190 | | 190 | | 160 |
| 60 | | 130 | | 160 | | 140 |
| 75 | | 110 | | 140 | | 120 |
| 90 | | 100 | | 120 | | 110 |
| 105 | | | | 100 | | 100 |
| 120 | | | | | | |
| Time (sec) until Foam Disappearance | 13 | 87 | 11 | 94 | 20 | 103 |

Based on the results shown in Table 3 and Figure 5, it was confirmed that the foam retention is improved when Reb. B and Reb. M are contained in various commercially available beverages.

## Claims

1. A sparkling beverage having a content of Reb. B of 6 to 45 ppm and a content of Reb. M of 600 ppm or less.

2. The sparkling beverage according to claim 1, wherein the content of Reb. B is 8 to 45 ppm.

3. The sparkling beverage according to claim 1 or 2, wherein the content of Reb. B is 8 to 40 ppm.

4. The sparkling beverage according to any one of claims 1 to 3, wherein the content of Reb. B is 10 to 40 ppm.

5. The sparkling beverage according to any one of claims 1 to 4, wherein the content of Reb. B is 12 to 20 ppm.

6. The sparkling beverage according to claim 1, wherein the content of Reb. B is 6 ppm or more and less than a sweetness threshold value.

7. The sparkling beverage according to any one of claims 1 to 6, wherein the content of Reb. M is 500 ppm or less.

8. The sparkling beverage according to any one of claims 1 to 7, further comprising one or more steviol glycosides selected from the group consisting of Reb. A, Reb. C, Reb. D, Reb. E, Reb. F, Reb. G, Reb. I, Reb. J, Reb. K, Reb. N, Reb. O, Reb. Q, Reb. R, dulcoside A, rubusoside, steviolmonoside, steviolbioside and stevioside.

9. The sparkling beverage according to any one of claims 1 to 8, comprising one or more steviol glycosides selected from the group consisting of Reb. A, Reb. C, Reb. E, Reb. F, Reb. G, Reb. I, Reb. J, Reb. K, Reb. N, Reb. O, Reb. Q, Reb. R, dulcoside A, rubusoside, steviolmonoside, steviolbioside and stevioside in an amount equal to or less than five times the content of Reb. B.

10. The sparkling beverage according to claim 7, wherein a content of Reb. A is 0 to 100 ppm.

11. The sparkling beverage according to any one of claims 1 to 10, further comprising one or more sweeteners selected from the group consisting of sucrose, high fructose corn syrup, erythritol, Mogroside V, corn syrup, aspartame, sucralose, acesulfame potassium, saccharin and xylitol.

12. The sparkling beverage according to any one of claims 1 to 11, wherein the gas pressure is 1.0 kgf/cm² to 3.5 kgf/cm².

13. The sparkling beverage according to any one of claims 1 to 11, having pH of 2.0 to 4.0.

14. The sparkling beverage according to any one of claims 1 to 13, wherein a ratio between Reb. B and Reb. M is 1:2 to 1:300 in terms of weight ratio.

15. The sparkling beverage according to any one of claims 1 to 14, having Brix of 5 to 13.

16. The sparkling beverage according to any one of claims 1 to 15, having an alcohol content of less than 0.05 v/v%.

17. The sparkling beverage according to any one of claims 1 to 16, wherein the sparkling beverage is an orange-flavored, lemon-flavored, lime-flavored, grape-flavored, ginger ale-flavored, cassis-flavored or cola-flavored beverage.

18. The sparkling beverage according to any one of claims 1 to 17, comprising one or more selected from the group consisting of caramel, cinnamic aldehyde, phosphoric acid, vanilla and caffeine.

19. The sparkling beverage according to any one of claims 1 to 18, wherein foam is stabilized.

20. A method for improving foam retention of a sparkling beverage, comprising a step of preparing a sparkling beverage comprising 6 to 45 ppm of Reb. B and 600 ppm or less of Reb. M.

21. Use of Reb. B for improving foam retention of a sparkling beverage comprising Reb. M.

22. Use according to claim 21, wherein foam is stabilized for 26 seconds or more.

23. Use according to claim 21, wherein foam is stabilized for 30 seconds or more.

24. An agent comprising Reb. B, wherein the agent is for improving foam retention of a sparkling beverage comprising Reb. M.
